# FASCICULE DE BREVET EUROPEEN

(11) **EP 1 574 397 B1**
(45) Date de publication et mention de la délivrance du brevet: **02.05.2007**
(21) Numéro de dépôt: 05290358.0
(22) Date de dépôt: 17.02.2005
(51) Int. Cl.: B60R 16/02, H02G 11/00

(54) **Fourreau pour faisceau électrique monté entre une caisse et un ouvrant de véhicule à moteur, et son procédé de fabrication**
Zwischen einem sich öffnenden Teil und der Karrosserie eines Kraftfahrzeugs montierte Umhüllung für elektrisches Bündel und deren Herstellungsverfahren
Sleeve for electrical bundle mounted between an opening part and the body of a motor vehicle, and process for manufacturing the same

(30) Priorité: 10.03.2004 FR 0402479
(43) Date de publication de la demande: 14.09.2005
(73) Titulaire: LE JOINT FRANCAIS, 75008 Paris (FR)
(72) Inventeur: Urbain, Didier, 49500 Sainte Gennes d'Andigne (FR); Leonard, Xavier, 44370 La Rouxiere (FR); Lafosse, Sébastien, 45200 Amilly (FR)
(74) Mandataire: Bolinches, Michel Jean-Marie

(56) Documents cités:
- EP-A- 1 158 637
- EP-A- 1 193 132

## Description

L'invention concerne un fourreau pour faisceau électrique monté entre une caisse et un ouvrant de véhicule à moteur, ainsi que le procédé de fabrication de ce fourreau.

Actuellement, un fourreau ou passe-gaine pour faisceau électrique est une pièce tubulaire monobloc qui est réalisée en un caoutchouc vulcanisé et qui présente une grande souplesse pour pouvoir suivre les débattements de l'ouvrant par rapport à la caisse du véhicule à moteur. Un tel fourreau présente deux parties d'extrémité de raccordement sur la caisse et sur l'ouvrant, et une partie centrale corruguée lui conférant toute la souplesse requise lors des débattements de l'ouvrant. Au moins l'une des parties d'extrémité du fourreau peut être équipée d'une bague de fixation par clippage sur la caisse ou sur l'ouvrant, cette bague étant rapportée sur ladite partie d'extrémité. Les parties d'extrémité du fourreau n'ont pas nécessairement le même diamètre et lorsqu'une bague de fixation est rapportée sur chacune des parties d'extrémité du fourreau, cela impose la gestion de trois pièces : le fourreau et les deux bagues de fixation. Un tel fourreau s'étend sur une longueur de l'ordre de 125mm et pèse environ 120 grammes.

La fabrication de ces fourreaux est réalisée par une technique d'injection d'un matériau élastomère tel du caoutchouc dans un moule qui comprend notamment un noyau pour réaliser la partie centrale corruguée sous la forme d'ondulations circulaires, l'opération de démoulage de la partie centrale corruguée s'effectuant par un soufflage d'air.

Le document EP 1 158 637 A divulgue un fourreau selon le préambule de la revendication 1 et un procédé de fabrication selon le préambule de la revendication 6.

D'une manière générale, les constructeurs automobiles cherchent toujours à concevoir des véhicules avec des équipements sophistiqués mais sans pour autant augmenter le poids du véhicule, sachant que toute solution technique visant même à réduire le poids de ces équipements est analysée d'une manière favorable.

Un but de l'invention est notamment de réduire le poids des fourreaux précités qui sont au moins de cinq pour un véhicule à quatre portes, et de réduire le coût de la gestion des références des pièces de ces fourreaux.

Pour atteindre ces buts, l'invention propose un fourreau pour faisceau électrique apte à être monté entre une caisse et un ouvrant de véhicule à moteur, ce fourreau étant constitué d'une pièce tubulaire monobloc et flexible présentant deux parties d'extrémité de raccordement et une partie centrale corruguée, et étant réalisé à partir d'un matériau thermoplastique élastomère, caractérisé en ce que sa partie centrale présente des corrugations réalisées sous la forme d'un pas de vis.

Il est important de noter que l'utilisation d'un matériau thermoplastique élastomère injecté dans un moule pour réaliser le fourreau ne permet plus une opération de démoulage de sa partie centrale corruguée avec des ondulations circulaires par soufflage d'air, et c'est pour cette raison que les corrugations du fourreau selon l'invention sont réalisées sous la forme d'un pas de vis de manière à permettre une opération de démoulage par un mouvement de rotation du noyau du moule autour duquel est réalisée la partie centrale corruguée du fourreau.

Le matériau thermoplastique élastomère utilisé pour fabriquer le fourreau peut être un mélange de polypropylène et d'EPDM.

Selon une variante de l'invention, on peut prévoir une bague de fixation sur au moins l'une des parties d'extrémité du fourreau, une telle bague étant avantageusement surmoulée sur ladite partie d'extrémité du fourreau et peut être réalisée en polypropylène par exemple légèrement chargé.

L'invention a également pour objet un procédé de fabrication d'un fourreau tel que défini précédemment qui est caractérisé en ce qu'il consiste à le réaliser par injection d'un matériau élastomère thermoplastique à l'intérieur d'un moule comprenant au moins un noyau autour duquel est formée la partie centrale corruguée du fourreau, et à démouler la partie centrale par rotation du noyau.

D'une manière générale, le noyau du moule se présente sous la forme d'une barre dont la surface périphérique est corruguée avec des ondulations suivant un pas de vis, qui ont des formes complémentaires de celles à réaliser dans la partie centrale du fourreau et, selon une variante de réalisation du procédé de fabrication selon l'invention, on donne au fourreau une forme tronconique pour faciliter le retrait du noyau par rotation lors de l'opération de démoulage du fourreau.

Selon une autre caractéristique de l'invention, le procédé consiste à surmouler une bague de fixation autour d'au moins une partie d'extrémité du fourreau.

Un fourreau selon l'invention présente de nombreux avantages parmi lesquels il faut notamment citer :
- un gain en poids d'environ 40% par rapport aux fourreaux selon l'art antérieur évoqué en préambule ;
- un coût de gestion diminué du fait que la ou les bagues de fixation du fourreau sont surmoulées ; et
- une possibilité de recyclage des fourreaux.

D'autres avantages, caractéristiques et détails de l'invention ressortiront du complément de description qui va suivre en référence à des dessins annexés, donnés uniquement à titre d'exemple et dans lesquels :
- la figure 1 est une vue en perspective d'un fourreau selon l'invention ;
- la figure 2 est une vue selon la flèche II de la figure 1 ;
- la figure 3 est une vue en coupe schématique pour illustrer le procédé de fabrication d'un fourreau selon l'invention, et
- la figure 4 est une vue similaire à celle de la figure 2 pour illustrer une variante de réalisation du fourreau selon l'invention.

Dans l'industrie automobile on utilise des fourreaux montés entre la caisse du véhicule et certains de ses ouvrants, les portes en particulier, pour faire passer des faisceaux de câbles électriques. Ces fourreaux doivent être souples pour accepter tous les débattements de l'ouvrant sans risque de détériorer les faisceaux de câbles électriques.

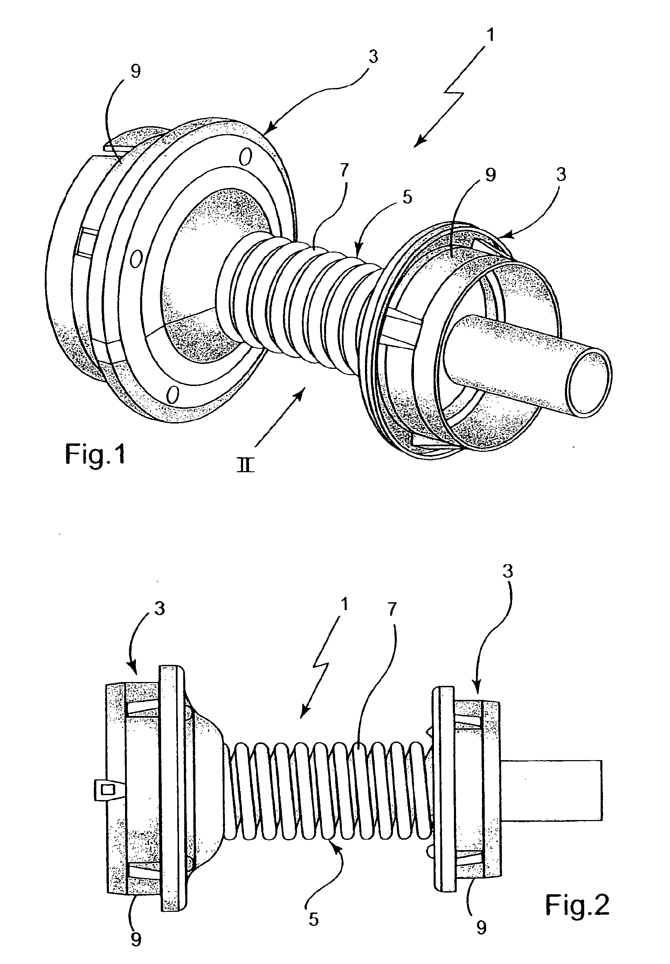

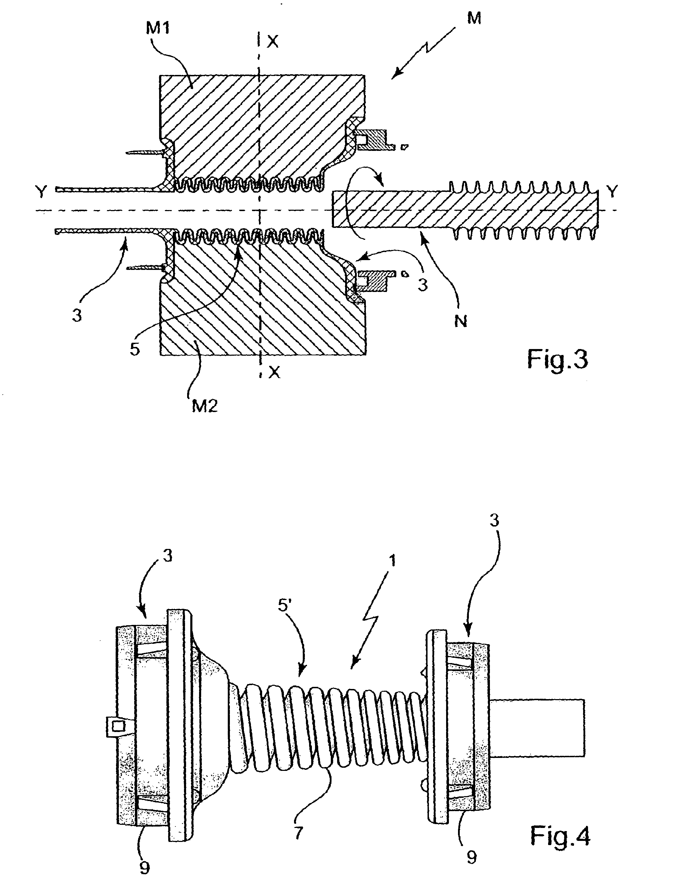

Un fourreau 1 selon l'invention est illustré aux figures 1 et 2. Le fourreau 1 est une pièce tubulaire monobloc et flexible qui présente deux parties d'extrémité de raccordement 3 et une partie centrale corruguée 5. Les deux parties d'extrémité 3 sont destinées à venir se fixer de manière étanche sur la caisse du véhicule et l'un de ses ouvrants d'une manière connue en soi. La partie centrale corruguée 5 du faisceau 1 présente des ondulations 7 sous la forme d'un pas de vis et non des ondulations circulaires selon l'art antérieur évoqué en préambule.

Le fourreau 1 est réalisé à partir d'un matériau thermoplastique élastomère tel qu'un mélange de polypropylène et d'EPDM par exemple. Pour fabriquer le fourreau 1, on utilise un moule M tel qu'illustré sur la figure 3. Ce moule M comprend deux coquilles M₁ et M₂ mobiles l'une vers l'autre suivant un axe X-X pour délimiter entre elles une cavité, et un noyau central N mobile suivant un axe Y-Y perpendiculaire à l'axe X-X. Le matériau thermoplastique élastomère est injecté dans la cavité délimitée par les deux coquilles M₁ et M₂ du moule M et le noyau central N. Une fois l'opération d'injection effectuée et pour démouler notamment la partie centrale corruguée 5 du fourreau 1, on procède à un retrait du noyau central N par un mouvement de rotation pour le dégager de la partie centrale corruguée 5 du fourreau 1.

Selon une variante de réalisation illustrée à la figure 4, on réalise la partie corruguée 5' du fourreau en lui donnant une forme tronconique de manière à faciliter l'opération de démoulage.

Les parties d'extrémité de raccordement 3 du fourreau 1 peuvent également recevoir une bague de fixation 9 qui est surmoulée sur le fourreau 1 sans la présence d'agents d'adhérisation, cette bague 9 étant par exemple réalisée en polypropylène légèrement chargé. Concrètement, on injecte dans un premier temps dans le moule M le matériau constituant les deux bagues de fixation 9, puis on injecte ensuite dans le moule M le matériau constituant la fourreau 1.

La faisceau de câbles sert notamment à alimenter les moyens situés sur une porte de véhicule pour commander les lèves vitres par exemple ou tout autre accessoire du véhicule.

## Revendications

1. Fourreau pour faisceau électrique apte à être monté entre une caisse et un ouvrant de véhicule à moteur, ce fourreau (1) étant constitué d'une pièce tubulaire monobloc et flexible présentant deux parties d'extrémité de raccordement (3) et une partie centrale corruguée (5), et étant réalisé à partir d'un matériau thermoplastique élastomère, **caractérisé en ce que** sa partie centrale (5) présente des corrugations (7) réalisées sous la forme d'un pas de vis.

2. Fourreau selon la revendication 1, dans lequel la partie centrale corruguée (5) du fourreau présente une forme tronconique.

3. Fourreau selon la revendication 1 ou 2, dans lequel le matériau thermoplastique élastomère pour réaliser le fourreau (1) est formé à partir d'un mélange de polypropylène et d'EPDM.

4. Fourreau selon la revendication 1, 2 ou 3, dans lequel le fourreau (1) présente une bague de fixation (9) rapportée autour de l'une au moins de ses deux parties d'extrémité, ladite bague (9) étant surmoulée sur ladite partie d'extrémité (3).

5. Fourreau selon la revendication 4, dans lequel la bague de fixation (9) est réalisée en polypropylène par exemple et est surmoulée sans présence d'agents d'adhérisation.

6. Procédé de fabrication d'un fourreau (1) tel que défini par l'une des revendications précédentes, **caractérisé en ce qu**'il consiste à le réaliser par injection d'un matériau élastomère thermoplastique à l'intérieur d'un moule (M) comprenant au moins un noyau (N) autour duquel est formée la partie centrale corruguée (5) du fourreau, et à démouler la partie centrale (5) par rotation du noyau (N).

7. Procédé selon la revendication 6, **caractérisé en ce qu**'il consiste à surmouler une bague de fixation (9) autour d'au moins une partie d'extrémité (3) du fourreau.

## Claims

1. Sleeve for an electric bundle designed to be mounted between a motor vehicle body and an opening thereof, which sleeve (1) comprises a flexible, one-piece tubular part with two end connector parts (3) and a corrugated central part (5) and is made from a thermoplastic elastomeric material, **characterised in that** its central part (5) has corrugations (7) made in the shape of a screw thread.

2. Sleeve as claimed in claim 1, in which the corrugated central part (5) of the sleeve is of a frustoconical shape.

3. Sleeve as claimed in claim 1 or 2, in which the thermoplastic elastomeric material used to make the sleeve (1) is made up of a mixture of polypropylene and EPDM.

4. Sleeve as claimed in claim 1, 2 or 3, in which the sleeve (1) has a fixing ring (9) fitted around at least one of its two end parts, which ring (9) is overmoulded onto said end part (3).

5. Sleeve as claimed in claim 4, in which the fixing ring (9) is made from polypropylene, for example, and is overmoulded on in the absence of adhesive agents.

6. Method of manufacturing a sleeve (1) as defined by one of the preceding claims, **characterised in that** it consists in making it by injecting a thermoplastic elastomeric material into the interior of a mould (M) containing at least one core (N), around which the corrugated central part (5) of the sleeve is moulded, and demoulding the central part (5) by rotating the core (N).

7. Method as claimed in claim 6, **characterised in that** it consists in overmoulding on a fixing ring (9) around at least one end part (3) of the sleeve.

## Patentansprüche

1. Umhüllung für ein Leitungsbündel, die zwischen einem Wagenkasten und einem Türflügel eines Motorfahrzeugs montiert werden kann, wobei diese Umhüllung (1) aus einem einstückigen und flexiblen rohrförmigen Bauteil besteht, das zwei Anschluss-Endbereiche (3) und einen gewellten Mittelbereich (5) aufweist, und ausgehend von einem thermoplastischem Elastomermaterial hergestellt wird, **dadurch gekennzeichnet, dass** ihr Mittelbereich (5) Wellungen (7) aufweist, die in Form eines Schraubengangs hergestellt werden.

2. Umhüllung nach Anspruch 1, bei der der gewellte Mittelbereich (5) der Umhüllung eine Kegelstumpfform aufweist.

3. Umhüllung nach Anspruch 1 oder 2, bei der das thermoplastische Elastomermaterial zur Herstellung der Umhüllung (1) ausgehend von einer Mischung aus Polypropylen und EPDM geformt wird.

4. Umhüllung nach Anspruch 1, 2 oder 3, bei der die Umhüllung (1) einen Befestigungsring (9) aufweist, der um mindestens einen ihrer zwei Endbereiche aufgesetzt wird, wobei der Ring (9) auf den Endbereich (3) aufgeformt wird.

5. Umhüllung nach Anspruch 4, bei der der Befestigungsring (9) zum Beispiel aus Polypropylen hergestellt und ohne Gegenwart von Haftmitteln aufgeformt wird.

6. Verfahren zur Herstellung einer Umhüllung (1) , wie sie durch einen der vorhergehenden Ansprüche definiert ist, **dadurch gekennzeichnet, dass** es darin besteht, sie durch Spritzen eines thermoplastischen Elastomermaterials in eine Form (M) herzustellen, die mindestens einen Kern (N) aufweist, um den herum der gewellte Mittelbereich (5) der Umhüllung geformt wird, und den Mittelbereich (5) durch Drehen des Kerns (N) auszuformen.

7. Verfahren nach Anspruch 6, **dadurch gekennzeichnet, dass** es darin besteht, einen Befestigungsring (9) um mindestens einen Endbereich (3) der Umhüllung aufzuformen.
